# EUROPEAN PATENT SPECIFICATION

(11) **EP 2 514 613 B1**
(45) Date of publication and mention of the grant of the patent: **24.07.2013**
(21) Application number: 12161033.1
(22) Date of filing: 23.03.2012
(51) Int. Cl.: B60C 25/138, B60C 25/05

(54) **Tyre changer machine and method for lifting a wheel for loading it on the tyre changer machine.**
Reifenwechselmaschine und Verfahren zum Anheben eines Reifens zum Laden des Reifens auf die Reifenwechselmaschine
Machine de changement de pneu et procédé de levage d'une roue pour son chargement sur la machine de changement de pneu

(30) Priority: 18.04.2011 IT BO20110209
(43) Date of publication of application: 24.10.2012
(73) Proprietor: CORGHI S.p.A., 42015 Correggio (Reggio Emilia) (IT)
(72) Inventor: Corghi, Giulio, 42015 CORREGGIO (Reggio Emilia) (IT)
(74) Representative: Conti, Marco

(56) References cited:
- EP-A1- 1 982 851
- EP-A1- 2 062 753
- EP-A2- 1 253 026

## Description

This invention relates to a tyre changer machine and a method for lifting a wheel for loading it on the tyre changer machine.

This invention applies in particular to the automotive field and, more specifically, to the sector of vehicle and tyre changer service equipment.

Each tyre changer machine comprises a supporting frame, a wheel-holder unit (or tabletop) which can rotate relative to the frame, on which the wheel (rim with or without tyre) is loaded for mounting and demounting operations.

In particular, this invention focuses on the wheel lifting device, designed to lift it from the ground to aid the operator and allow wheel positioning on the tabletop.

In the prior art there are various different lifting devices for vehicle wheels (that is to say, tyres, rims or the tyre and rim assembly) which aid the operator in operations for loading, positioning and unloading tyres, rims or wheels on tyre changer machines.

Hereinafter the term "wheel" will be used generically both with reference to the tyre only and to the rim only, as well as the combination of both.

The purpose of this is to streamline the text and make it easier to read.

The use of mobile lifting frames or structures is known for moving wheels from the ground to the operating position, that is to say, from a lowered position in which the operator can effortlessly load them onto the frame to a raised position above a wheel-holder unit (or tabletop) of the tyre changer machine.

A first technology according to the features of the preamble of claim 1 is known from document EP 1253026, by this Applicant, which shows a lifting device having a base, which can be coupled to a tyre changer machine, connected to a supporting frame for a wheel, the frame being able to move by rotation between a lowered position and a raised position.

In particular, the frame consists of two parts which adopt different positions relative to each other in the lowered position and in the raised position.

More precisely, in the lowered position the two parts of the frame form an "L" shape which is in an upright configuration in such a way as to allow positioning of the wheel by simply rolling, whilst in the raised position the parts are higher than the tabletop and are aligned for positioning the wheel at the tabletop, with a vertical axis. Disadvantageously, said type of lifting device is quite bulky, above all due to the need to be moved over the tabletop (as well as having to at least partly surround it) so as to allow correct positioning of the wheel.

In fact, in such a solution the frame comprises at least two arms positioned at opposite sides and symmetrically with respect to the tabletop, and arranged on a plane perpendicular to the tabletop axis, when the frame is in a raised position. In this way, the frame is able to hold the wheel over the tabletop, with its axis vertical and aligned with the tabletop axis; however, said frame is particularly large and heavy.

A second solution is known from European Patent 2133220, which describes a lifting device structured substantially like an anthropomorphic wrist.

More precisely, the device shown in that text comprises a clamp able to move vertically along a sliding arm (which can be positioned at the side of the tyre changer machine and can be connected to it) between a lowered position and a raised position.

The clamp can rotate about two axes of rotation which are at right angles to each other in such a way as to allow positioning of the wheel.

More precisely, a first axis of rotation corresponds to the axis of extension of the vertical arm, in such a way as to allow movement of the clamp from a position at the side of the tyre changer machine to a position above the tabletop. The second axis of rotation is at a right angle to the first, allowing translation of the wheel by rotation from a loading condition, in which it is substantially upright (for example with a horizontal axis), to an operating condition, in which it is substantially horizontal (for example with a vertical axis).

Similarly to the previous solution, and in an even more accentuated fashion, the device shown in document EP 2133220 has considerable dimensions and also requires, at the side of the machine, ample room for manoeuvre, to allow movement and positioning of the wheel.

Therefore, a solution of this type requires a particularly complex control system (not absolutely, but relative to other lifting devices). The prior art also includes another technical solution, in document VR99A000047.

That patent describes a lifting device which can be associated with a tyre changer machine and comprising a transversal frame designed to be positioned around a wheel-holder unit (tabletop) and with its top delimiting a sustaining and sliding surface for a wheel lying on it (for example resting with its axis at a right angle to said surface).

The transversal frame can move up and down, from a position below the wheel-holder unit to a position above it.

Moreover, the device comprises an "L"-shaped lateral frame kinematically connected to the transversal frame for moving (rotating relative to the transversal frame) between a lowered position, in which it is at a right angle to the transversal frame and can receive the wheel by simply rolling, and a raised position in which it is aligned with the transversal frame for allowing wheel centring on the wheel-holder unit.

During the passage from the lowered position to the raised position the wheel loaded (that is to say, its central axis) is tipped over.

Again in this case, the device is particularly bulky because it completely surrounds the wheel-holder unit (tabletop).

Moreover, each of the two frames has its own actuator, making its production complex and expensive.

It should be noticed that, in all of the devices described above the device must return to a home configuration (with the frame in a lowered position relative to the tabletop) during the operations for mounting and demounting tyres, since the lifting frames described are positioned above the tabletop and hinder the operations of the tyre changer machine (indeed, some of them have a third position in which the frame is raised off the ground but below the tabletop, ready to receive the wheel again at the end of the operations).

There is also a prior art lifting device for tyre changer machines which is formed by a single horizontal frame positioned close to the machine.

In particular, the frame can translate between a lowered position, designed for receiving the wheel to be loaded, and a raised position.

That device is not affected by problems relating to dimensions typical of the lifting devices described above, but is disadvantageous since it requires considerable effort by the operator to move the wheel from the position in which it is lifted by the lifting device (which is distant from the wheel-holder unit, or tabletop) to the end of the wheel-holder unit.

Therefore, said solution, although not bulky, makes wheel positioning by the user difficult, in the sense that it requires physical effort and involves risks to operator health.

Patent documents EP1982851 and EP2062753 disclose tyre fitting machines provided with other typologies of devices for lifting the wheel; said devices have a frame which rotates about an axis, in order to rotate the wheel from a vertical lowered position to a horizontal raised position; however, said devices entail a significant limitation of the work space available for the user of the tyre fitting machine.

In light of this, the technical purpose of this invention is to provide a lifting device for a tyre changer machine, and a tyre changer machine comprising said device, which overcome the above-mentioned disadvantages of the prior art.

In particular, the aim of this invention is to provide a tyre changer machine having a lifting device with reduced dimensions and which facilitates wheel positioning by the operator.

Moreover, the aim of this invention is to provide a tyre changer machine with a lifting device that is simple to make.

This invention also has for an aim to provide a tyre changer machine which speeds up the unloading procedure downstream of the mounting and demounting operations.

Moreover, this invention aims to provide a lifting device which can be associated in a particularly simple and rapid way with an existing tyre changer machine.

Those aims are fulfilled by the tyre changer machine according to the features of claim 1.

In particular, the movement means are configured in such a way that, when the structure is in the raised position, said at least one portion of the structure is positioned at one (single) side with respect to the wheel-holder unit, for defining a positioning surface located in the predetermined position (close to the one end of the wheel-holder unit).

In other words, the movement means are configured for arranging (positioning, displacing) said at least one portion of the structure aside with respect to the wheel-holder unit, for defining a positioning surface located in the predetermined position (close to the one end of the wheel-holder unit), when the structure is in the raised position.

In particular, the movement means are configured for arranging (positioning, displacing) said at least one portion of the structure at one (single) side with respect to the wheel-holder unit, for defining a positioning surface located in the predetermined position (close to the one end of the wheel-holder unit), when the structure is in the raised position.

Such a technical solution allows to provide lifting device which is particularly small and efficient. More precisely, the portion of the structure can move between a non-interference (distanced) position relative to the machine frame, and a position close to the wheel-holder unit, in which it forms a positioning surface located in the predetermined position, at the side of the wheel-holder unit.

It should be noticed that the movement means are designed to move the structure (and in particular the portion) without it intersecting with the axis of rotation of the wheel-holder unit (during the movement from the distant position to the close position).

Therefore, a first and second operating configurations of the mobile structure for lifting / positioning are defined.

More precisely, according to the invention the structure can be shifted between a contracted configuration (corresponding to the first configuration), in which it has minimum dimensions parallel with the supporting surface, and an extended configuration (corresponding to the second configuration), in which it has maximum dimensions parallel with the supporting surface.

Therefore, the positioning surface can be translated vertically (that is to say, along a mainly vertical predetermined trajectory) to lift/lower it together with the sustaining surface and moreover it can move relative to said surface, in such a way that, in the lowered position it is in a minimum dimensions position (distanced from the axis of rotation /the machine) and in the raised position it is projecting towards the axis of rotation and positioned at a predetermined distance from the upper end of the wheel-holder unit.

In other words, the movement means are designed to position the structure in the contracted configuration when it is in the lowered position in such a way as to position it at the side of the machine frame, and to position the structure in the extended configuration when it is in the raised position in such a way that it projects towards the axis of rotation of the wheel-holder unit and defines a wheel rolling path.

In the extended configuration, the sustaining surface and the positioning surface are side by side and at least partly adjacent to define the rolling path.

The positioning surface is positioned at the side of the wheel-holder unit without intersecting its axis of rotation, thus allowing an operator to tip the wheel onto the wheel-holder unit.

The sustaining surface shifts substantially vertically, positioned in the position distanced from the axis of the wheel-holder unit (that is to say, the axis of the machine), in such a way that it does not interfere with the machine, thus leaving a particularly large space for the user.

It should be noticed that in the expressions "sustaining surface" and "positioning surface", the term "surface" is used with its physical meaning, not the geometrical meaning.

In other words, the surface has a predetermined size (from the superficial extension of the first and the second body of the structure).

Moreover, although the surface is defined as "level", that does not aim to exclude the fact that the first and second body of the structure may have a reticular shape (grille or chain links), provided that the width of the links is considered irrelevant (that is to say, negligible) compared with the size of the tyre tread.

In other words, it is sufficient that the first and second body have a substantially flat face along which the wheel can continuously roll.

Preferably, the structure is made with two bodies able to move relative to each other, and in particular with a first body and a second body which are connected in such a way that shifting of the structure along the predetermined trajectory corresponds to a further shifting of the second body along the further trajectory.

In other words, lifting of the first body corresponds (as well as to lifting) to a movement of the second body towards the axis of rotation of the wheel-holder unit, and vice versa.

The second body therefore forms the portion of the structure able to move towards/away from the wheel-holder unit.

Preferably, the second body (that is to say, the body which shifts "radially" towards the axis of rotation) during the movement towards/away from the axis of rotation varies its orientation relative to the ground, and preferably rotates about an axis perpendicular to the axis of the wheel-holder unit. Alternatively, the two operating configurations may be produced with a single body able to move in two directions (first lifting, then, or simultaneously, towards the axis, by means of horizontal translation or, even better, rotation about a vertical axis).

This invention also relates to a method for lifting a wheel for loading it on a tyre changer machine according to the features of claim 13.

In particular, during the movement step and the approach step the sustaining surface (defined by the structure) is kept aside (at one single side) with respect to the tabletop.

Further features and advantages of this invention are more apparent from the non-limiting description which follows of a preferred, non-limiting embodiment of a tyre changer machine as illustrated in the accompanying drawings, in which:
- Figure 1 is a perspective view of a tyre changer machine according to this invention;

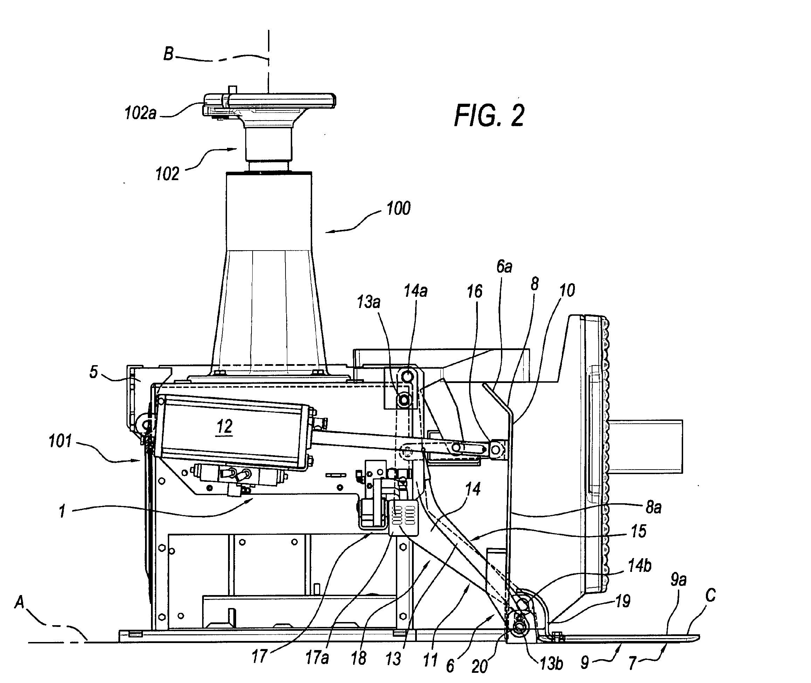

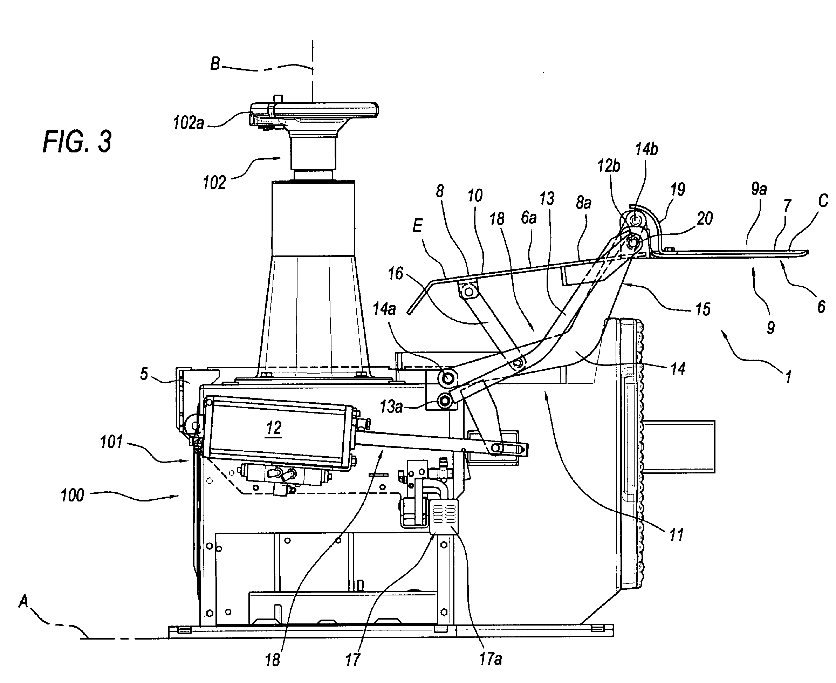

- Figures 2 and 3 are side views of the machine of Figure 1 in two different operating configurations;
- Figure 4 is a partial top view of the machine of Figure 3.

With reference to the accompanying drawings, the numeral 1 denotes a lifting device for a tyre changer machine 100 according to this invention. That device 1 is associated with a tyre changer machine 100 according to this invention, that is to say, a machine for mounting/demounting a tyre 2 on/from a respective rim 3.

It should be noticed that the expression "tyre changer machine" is commonly understood to refer to a machine able to both mount the tyre 2 on the rim 3, and to demount the tyre 2 from the rim 3.

The tyre changer machine 100 comprises a frame 101 for resting on a supporting surface "A", a wheel-holder unit 102 able to rotate relative to the frame 101 about its own axis of rotation "B" and a tool unit (not illustrated) which can move vertically towards and/or away from the wheel-holder unit 102 for performing the tyre 2 mounting/demounting operations.

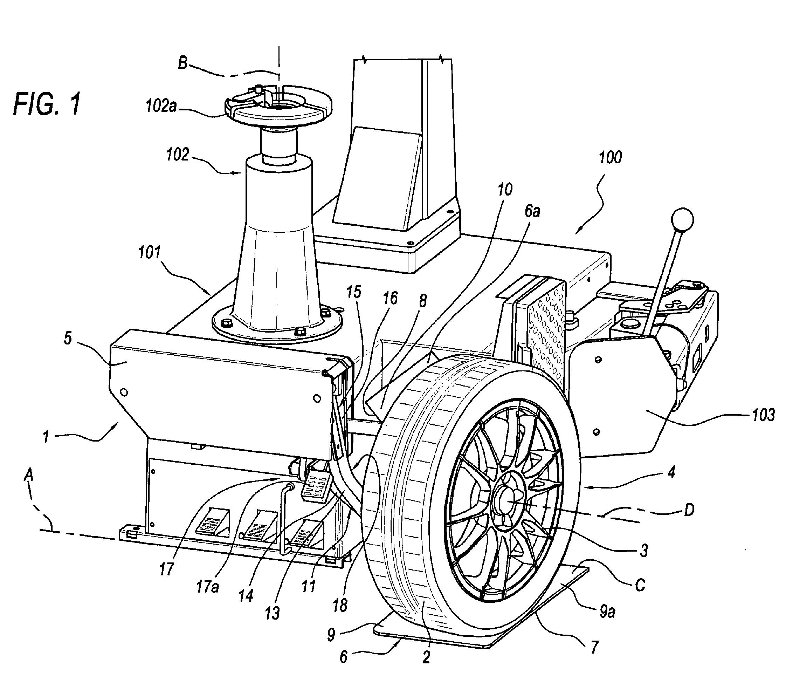

The tyre changer machine 100 also comprises a bead breaker device 103 for separating the tyre 2 from the rim 3. Figure 1 shows a bead breaker 103, positioned in the lower part of the tyre changer machine 100. In the prior art other bead breaker configurations are well known, therefore, they are not described any further.

The wheel-holder unit 102 of the machine 100 is designed to support the rim 3 for tyre 2 demounting or mounting.

In other words, the wheel-holder unit comprises a rotary tabletop 102a on which the rim 3 is centred and fixed to make it rotate (hereinafter the term tabletop and the term wheel-holder unit will be used substantially as synonyms).

The axis of rotation "B" of the wheel holder unit 102 is substantially vertical.

It should be noticed that hereinafter in this text the term wheel 4 will be used to generically refer both to the tyre 2 only and to the rim 3 only, as well as to the combination of both in an assembled configuration.

That generalisation is intended to streamline the text and make it easier to read at those points where the aim is to cover all possibilities for use of the machine 100 or of the lifting device 1.

Both the machine 100 and the device 1 can perform operating and movement steps with the tyre only, with the rim only or with the assembled wheel.

The device 1 comprises a base 5 for connection to the machine 1 and a structure 6 for sustaining and loading the wheel 4 able to move relative to the base 5 and connected to it by suitable movement means 18.

The connecting base 5 is coupled to a structure (frame 101) of the tyre changer machine 100 by suitable coupling means, for example screws, rivets or joints.

In the embodiment illustrated, the base 5 is connected to the frame 101 of the machine 100 cantilever-style, by means of a plurality of screws or rivets.

Alternatively, the base may be fixed at the side of the machine 100 in such a way as to make the device 1 a separate structure, although operating in conjunction with the tyre changer machine 100. Furthermore, the base could be integrated in the structure of the machine 100, making the device 1 a component of the machine 100.

As indicated, extending from the base 5 there are the movement means 18 of the structure 6 designed to sustain the wheel 4 during its movement from the floor (or from a position close to the floor) to an operating position, that is to say, from a lowered position in which the operator can effortlessly load the wheel onto the structure 6 to a position in which it can easily be positioned on the wheel-holder unit 102 of the machine 100.

The structure 6 is shaped in such a way as to form a sustaining surface "C" for the wheel 4 and can move up or down between a lowered position and a raised position.

In the structure 6 lowered position, the sustaining surface "C" is close to and substantially parallel with the surface "A" (preferably corresponding to the ground) supporting the tyre changer machine 100, thus allowing wheel 4 loading.

In other words, the structure 6 is at least partly abutting (that is to say, drawn near) the surface "A" supporting the machine 100 to help the operator to load the wheel 4.

Obviously, the operator loads the wheel 4 by pushing it onto the structure 6 (and in particular onto the sustaining surface "C") by simply rolling it, without any lifting effort.

In light of this, once positioned on the sustaining surface "C" the wheel 4 has a central axis "D" substantially parallel with the sustaining surface "C".

In other words, the central axis "D" of the wheel 4 is substantially parallel with the surface "A" supporting the machine 100 (that is to say, substantially horizontal).

Consequently, the wheel is in an upright position, resting on the tread.

In contrast, in the raised position, the sustaining surface "C" is at a height close to (that is to say, approximately the same as) that of an upper end of the wheel-holder unit 102 of the tyre changer machine 100.

During the movement of the structure 6 between the lowered position and the raised position, the sustaining surface "C" maintains substantially the same orientation relative to the surface "A" supporting the machine 100.

In other words, at least the part of the structure 6 forming the sustaining surface "C" translates between the two above-mentioned positions without being subject to any rotation (except, if any, in the sustaining surface "C" itself).

Consequently, during the translation between the lowered position and the raised position the wheel 4 always remains in the upright position (i.e.: with its central axis "D" parallel with the sustaining surface "C").

The movement means are therefore connected to the structure 6 for moving it between the lowered position and the raised position and vice versa along a predetermined trajectory, in such a way that the structure 6 is always kept away from the wheel-holder unit 102 without surrounding it and the sustaining surface "C" is always kept substantially parallel with the surface "A" supporting the machine 100.

The movement means 18 are also designed to further shift at least one portion 6a of the structure 6 along a further trajectory, towards the axis of rotation B of the wheel-holder unit 102 along a further trajectory, for positioning said at least one portion (6a) of the structure (6), when the structure (6) is in the raised position, in a predetermined position close to one end of the wheel-holder unit (102).

Advantageously, this allows the user (operator) to tip the wheel 4 from the predetermined position to a position for coupling with the wheel-holder unit 102 in which the wheel 4 has its axis aligned with the axis of rotation "B" of the wheel-holder unit 102 (preferably by turning the wheel through 90 degrees).

In other words, the movement means 18 are designed to move the structure 6 between a first configuration, distant from the axis of rotation "B" of the wheel-holder unit 102, and a second configuration, in which the structure 6 forms a positioning surface "E" close to the axis of rotation "B" of the wheel-holder unit 102. Consequently, the structure 6 can move (in particular the mobile portion 6a), not just up/down, but also between a position distanced from the axis of rotation "B" of the wheel-holder unit 102 and a position close to said axis of rotation "B".

In particular, the movement means 18 are designed to position the structure 6 in the first configuration when it is in the lowered position, and in the second configuration when it is in the raised position, for positioning the positioning surface "E" in a predetermined position relative to the upper end of the wheel-holder unit 102, thus allowing an operator to tip the wheel 4 onto the wheel-holder unit 102.

In other words, the portion 6a of the structure 6 is in the distanced position at least when the structure 6 is in the lowered position, and it is in the close position at least when it is in the raised position.

Consequently, the structure 6 is at least partly able to move transversally to the axis of rotation "B" towards and away from said axis to facilitate positioning of the wheel 4 on the wheel-holder unit 102 of the machine 100.

In light of this, the movement means are designed to give the structure 6 a first movement, along the predetermined trajectory, and a second movement, at least partly different to the first, along a further trajectory.

The predetermined trajectory is mainly a lifting/lowering trajectory.

The further trajectory is mainly a trajectory towards/away from the wheel-holder unit 102 (in particular towards/away from the axis of rotation "by).

Said trajectories may be separate and one coming after the other, or combined in such a way as to make the movement continuous.

It should be noticed that the first and second configurations of the structure 6 are configurations for non-interference between the structure 6 and the tyre changer machine 100.

In the first configuration the structure is entirely in a position distant from the axis of rotation "B" and away from the machine 100.

In the second configuration the structure is positioned above the frame 101 of the machine 100, next to (at the side of) the wheel-holder unit 102. In other words, during its entire movement the structure 6 does not interfere with a structure 105 of the machine.

Therefore, the structure 6 and the movement means 18 form an operating space for movement of the device 1 which is located at the side of the wheel-holder unit 102 at a predetermined distance from the axis of rotation "B".

In the proximal position (that is to say, when the structure is in the raised position), the portion 6a of the structure 6 is alongside the wheel-holder unit 102 to allow the operator to tip the wheel 4 onto the wheel-holder unit 102.

Therefore, the portion 6a is at the side of the wheel-holder unit 102, radially distanced from it. Consequently, in the second configuration (for positioning), the positioning surface "E" is close to the tabletop 102a, allowing the operator to effortlessly tip the wheel 4 onto the wheel-holder unit 102.

The term "tip" substantially refers to turning the wheel 4 so that the wheel passes from an upright condition (in which its central axis "D" is substantially horizontal) to a horizontal position (in which its central axis "D" is substantially vertical).

That horizontal position is the wheel 4 operating position on the tyre changer machine 100, which operates with a vertical axis.

Consequently, the device 1 according to this invention does not perform the wheel 4 tipping, but simply lifts the wheel and allows it to be drawn near the wheel-holder unit 102.

In light of this, it is clear that the structure 6 is never positioned above or surrounding the wheel-holder unit 102 (nor the tabletop 102a).

In contrast, as already indicated, the portion 6a of the structure (with reference to a rotation surface of the tabletop 102a) is positioned entirely at the side of the wheel-holder unit 102. In other words, the structure 6 (and in particular the positioning surface "E") during the movement between the first and second configurations never intersects the axis of rotation "B" of the wheel-holder unit 102.

More precisely, in the portion 6a distanced position, the positioning surface "E" is located at the side of (i.e.: at a predetermined distance from) the wheel-holder unit 102 without intersecting its axis of rotation "B" in such a way as to allow an operator to tip the wheel 4 onto the wheel-holder unit 102.

Therefore, the portion 6a is connected to the movement means 18 in such a way that it never intersects the axis of rotation "B" of the wheel-holder unit 102 during the movement from the distanced position to the close position.

It should be noticed that, the portion 6a of the structure 6 being able to retract away from the axis of rotation "B", the dimensions of the structure 6 in the second configuration are limited, at least radially (that is to say, transversally to the axis of rotation of the wheel-holder unit 102),

More precisely, the first and second configurations of the structure 6 are respectively configurations with minimum and maximum dimensions.

In other words, the structure 6 can be switched between a contracted configuration (corresponding to the first configuration), in which it defines minimum surface dimensions, and an extended configuration (corresponding to the second configuration), in which it defines maximum surface dimensions.

It should be noticed that the expressions "contracted configuration" and "extended configuration" hereinafter are used as synonyms respectively for the expressions "first configuration" and "second configuration". Consequently, the movement means 18 are designed to position the structure 6 in the contracted configuration when it is in the lowered position in such a way as to position it at the side of the machine 100 frame 101, and to position the structure 6 in the extended configuration when it is in the raised position in such a way that it projects towards the axis of rotation "B" of the wheel-holder unit 102 and defines a wheel 4 rolling path "P".

Advantageously, this allows limitation of the machine 1 dimensions, yet allows the operator to move the wheel 4 close to the tabletop 102a during positioning.

Preferably, when it is in the second configuration the height of the structure 6 (at least the portion 6a of the structure 6) is lower than that of the upper end of the wheel-holder unit 102 of the machine 100.

In particular, it is the positioning surface "E" which is lower than the upper end of the wheel-holder unit 102 of the machine 100.

More precisely, the height of the structure 6 is lower than that of a space for housing the wheel 4 on the wheel-holder unit 102 of the machine 100. The housing space can be defined as the space occupied by the wheel 4 when it is positioned on the wheel-holder unit 102 (or anchored to the tabletop 102a),

In light of this, the height of the structure 6 when it is in the second configuration is lower than the minimum height (that is to say, the lowest point) of the housing space.

Obviously, the minimum height of the housing space could vary depending on the width of the tread or other wheel 4 parameters.

Advantageously, the absence of interference between that operating space and the structure 6 allows the operator to keep the structure 6 in the second configuration even during tyre 2 mounting/demounting, thus speeding up the unloading procedure downstream of such operations.

Moreover, when it is in the second configuration, the structure 6 is at a distance from the axis of rotation "B" which is approximately equal to the radius of the housing space "V" for the wheel 4 on the wheel-holder unit 102 of the machine 100.

In other words, the portion 6a of the structure 6 is separated from the axis of rotation "B" by a measurement which is approximately equal to the radius of the wheel 4 to be positioned on the tabletop 102a.

Advantageously, in this way no lifting effort is required of the operator during tipping of the wheel 4 from the structure 6 (in particular from the portion 6a) onto the wheel-holder unit 102, since there is always at least one point of the wheel 4 resting on the structure 6.

To allow the extension and contraction of the structure 6, it comprises at least two bodies which can move relative to each other.

Preferably, the structure 6 comprises a first body 7 forming the sustaining surface "C", and a second body 8 connected to the first body 7 for shifting with it between the lowered position and the raised position.

The movement means 18 are designed to move the second body 8 relative to the first body 7 between a position close to the axis of rotation "B" of the wheel-holder unit 102, in which the second body 8 forms the positioning surface "E" of the second configuration, and a position distanced from the axis of rotation "B".

In other words, the first body 7 can move between the lowered position and the raised position, and the second body 8 is kinematically connected to the first body 7 for at least partly translating with it and moving relative to it between the close position and the distanced position.

Consequently, the second body 8 forms the portion 6a of the structure 6.

More precisely, the second body 8 translates with the first body 7 from the lowered position at the raised position (and vice versa) and can also move towards or away from the wheel-holder unit 102 (in particular towards/away from the axis of rotation "by).

In light of this, in the second configuration (that of maximum dimensions) of the structure 6, the first body 7 and the second body 8 form a rolling path for the wheel 4 which allows the wheel 4 to be moved towards and/or away from the wheel-holder unit 102 (that is to say, the axis "by).

While the first body 7 is raised (and the second body 8 rises with it) remaining distal from the axis of rotation "B", the second body 8 moves towards the axis "B", thus defining the path "P". Advantageously, in that configuration, the operator can easily move the wheel 4 by rolling it along the path "P" towards the axis of rotation "B" without any lifting effort being required.

It should be noticed that the movement towards the axis of rotation "B" may occur downstream of reaching the raised position or simultaneously with the upward movement, depending on the connecting kinematic mechanism between the first body 7 and the second body 8.

Similarly, the movement away from the axis of rotation "B" may occur upstream of (that is to say, before) the downward movement of the structure 6, or simultaneously with it.

Preferably, the first body 7 comprises (or even better, is at least partly formed by) a substantially horizontal plate 9 able to translate rigidly up and/or down between the lowered position and the raised position.

Consequently, the plate 9 is kept constantly orientated parallel with the surface "A" supporting the machine 100, its upper face 9a forming the sustaining surface "C".

Consequently, the first body 7 is substantially flat to form the sustaining surface "C", and in particular to make it level.

As already indicated, the levelness of the sustaining surface "C" (and of the positioning surface "E") shall be considered such relative to the size of the tread.

In other words, the first body 7 (as well as the second body) may also have a reticular shape (or chain links) provided that the width of the links is substantially negligible compared with the size of the tyre 2 tread.

Similarly, the second body also comprises (or even better, is at least partly formed by) a plate 10 kinematically connected to the plate 9 of the first body 7.

Said plates 9, 10, when the structure 6 is in the second (extended) configuration, form a rolling surface for the wheel 4.

In that extended configuration, the sustaining surface "C" and the positioning surface "E" (and consequently the first body 7 and the second body 8) are side by side and substantially adjacent, defining the rolling path. Therefore, the rolling path "P" is defined by the sustaining surface "C" and the positioning surface "E" acting in conjunction with each other.

In the embodiment illustrated, the second body 8 is rotatably associated with the first body 7 so that it can rotate relative to it between the close position and the distanced position.

More precisely, the second body 8 (that is to say, the plate 10) substantially pivots at the first body 7 (that is to say, at the plate 9) so that it can rotate between a position transversal (preferably at a right angle) to the first body 7 (forming the structure in the first configuration) and a position substantially aligned with the first body 7 (forming the structure in the second configuration).

At a joint 20 which allows the relative rotation between the two bodies 7, 8, the structure 6 comprises a protective cover 19 which allows the moving parts of the structure 6 to be kept clean. When the first body 7 and the second body 8 are substantially aligned, wheel 4 rolling on said joint could result in the insertion of dirt particles between rotatably coupled elements or damage such parts.

In other words, if when the structure 6 is in the first configuration the first body 7 and the second body 8 substantially form an "L"-shape, in which the second body 8 acts as a lateral wheel 4 stopping shoulder, in contrast, when the structure 6 is in the second configuration the first body 7 and the second body 8 are positioned one after the other in a substantially aligned fashion, defining the above-mentioned path "P".

The expression "substantially aligned" refers to a position which, unlike the transversal one, allows wheel 4 rolling along the two bodies 7, 8. Consequently, the two bodies 7, 8 do not have to be perfectly aligned, but it is sufficient for them to define a wheel 4 direction of rolling without creating impediments to wheel running.

There may even be a step (for example the cover 19) between one body and the other, or a slight relative angle, provided that these are not significant relative to the wheel 4 diameter.

In general, it is enough for the first body 7 and the second body 8 to be oriented along concordant directions.

Preferably, in the second configuration, the first body 7 and the second body 8 are at least partly next to each other (adjacent) to make the wheel 4 rolling path "P" substantially continuous, simplifying the work of the operator.

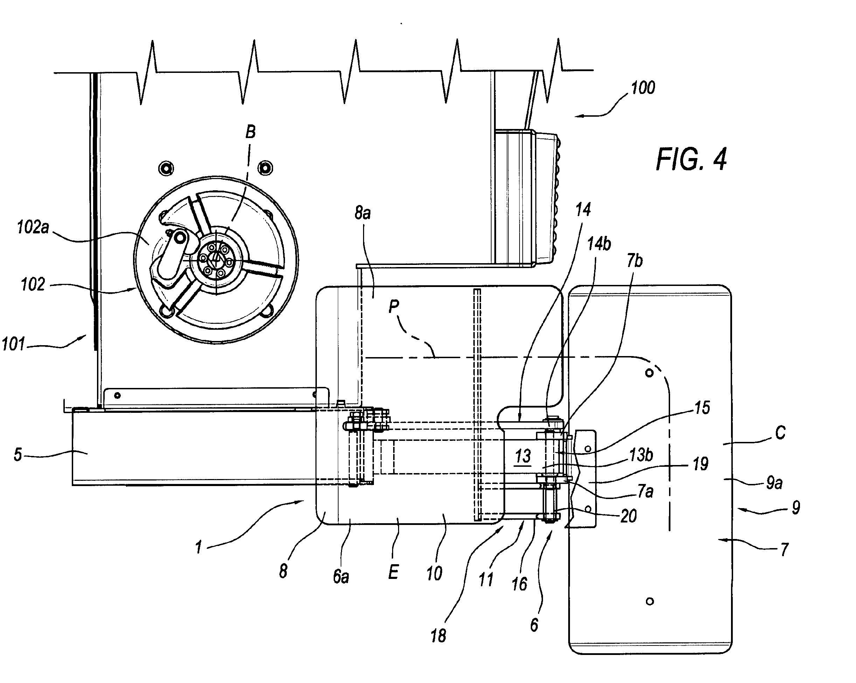

With reference to Figure 4, it can be seen how the first body 7 (and in particular the plate 9) has a substantially rectangular shape, elongate along a direction aligned with an axis of rotation of the second body 8.

The joint 20 is connected to the first body 7 at a centre line of the first body.

The term "centre line" refers to a mid-line of the first body 7 which is aligned (that is to say, parallel) with the axis of rotation of the second body 8.

Advantageously, that allows even distribution of the stresses on the first body 7.

Said joint 20, at least in the second configuration, is interposed between the first body 7 and the second body 8, at least partly separating them.

For that purpose, the second body 8 is substantially "L"-shaped in such a way that it has a portion which goes around the joint to abut adjacent to the first body 7.

In other words, in the second configuration, the second body 8 has a projecting portion 8a which in the second configuration is alongside the joint 20 and adjacent to the first body 7.

That projecting portion 8a substantially corresponds to the "short side" of the "L" shape formed by the second body.

Consequently, the joint 20 is positioned in the groove formed by the "L" shape of the second body 8.

In this way, as already indicated, the wheel 4 rolling path "P" is advantageously substantially continuous, simplifying the work of the operator. The configuration just described allows the operator to easily turn the wheel 4 on the sustaining surface "C" between a position in which its central axis "D" is at a right angle to the axis of rotation of the second body 8 and a position in which the wheel 4 (still upright) has its central axis "D" substantially parallel with said axis of rotation (that is to say, at a right angle to the rolling path "P").

This allows the operator to easily move the wheel 4 towards the wheel-holder unit 102 by simply rolling it.

In particular, when the structure 6 is in the second configuration, the operator first turns the wheel on itself (keeping it upright) and then rolls it from the first body 7 to the second body 8 so as to move it towards the tabletop 102a.

Only when it is close to the tabletop 102a is the wheel 4 tipped (that is to say, brought from the upright position to the horizontal position). Preferably, the rotation of the second body 8 occurs simultaneously with the translation of the first body 7 between the lowered position and the raised position.

To allow said movements to occur simultaneously, the movement means 18 comprise a kinematic mechanism 11 connected to the first body 7 and to the second body 8 and designed in such a way that lifting of the first body 7 corresponds to movement of the second body 8 towards the axis of rotation "B" of the wheel-holder unit 102, and vice versa. Preferably, the kinematic connecting mechanism 11 comprises a first arm 13 and a second arm 14 each comprising a first end 13a, 14a pivoting at the base 5 and a second end 13b, 14b pivoting at the first body 7, thus forming a four-bar linkage 15 (able to rotate in its own rotation plane which is transversal, preferably at a right angle to the sustaining surface "C"), in such a way that the orientation of the sustaining surface "C" is constant during movement of the structure 6 from the lowered position to the raised position and vice versa.

Advantageously, in this way a rotation of the arms 13, 14 corresponds to raising (or lowering) of the first body 7 and the second body 8.

It should be noticed that the rotation plane of the four-bar linkage 15 is at a right angle to the axis of rotation of the second body 8.

In light of this, the predetermined trajectory (of lifting) is substantially curvilinear.

The second ends 13b, 14b of the arms form the joint 20 previously described.

Said arms 13, 14 each rotate about their own hinge axis which is substantially at a right angle to the axis of rotation "B" of the tabletop 102a. Consequently, said hinge axis is parallel with the axis of rotation of the second body 8. Consequently, the kinematic mechanism 11 is connected to the first body 7 at a centre-line of the first body.

The term "centre line" refers to a mid-line of the first body 7 which is aligned (that is to say, parallel) with the rotation plane of the four-bar linkage 15.

Advantageously, that allows even distribution of the stresses on the second body 8.

Preferably, said hinge axes are positioned at different heights to form the four-bar linkage 15. More precisely, the two arms 13, 14 have hinge points which are one above the other (that is to say, positioned at different heights) with both the base 5 and the first body 7.

In the embodiment illustrated, the hinge point 13a between the first arm 13 and the base 5 is positioned at a height lower than the hinge point 14a between the second arm 14 and the base 5. Similarly, the hinge point 13b between the first arm 13 and the first body 7 is positioned at a height lower than the hinge point 14b between the second arm 14 and the first body 7.

In that way, the first body 7 (and in particular the upper face 9a of the plate 9) is not subject to any rotation during lifting (or lowering). Preferably, the first body 7 comprises at least one connecting tab extending transversally to the sustaining surface "C" and at whose ends the arms 13, 14 are hinged.

In the embodiment illustrated, the first body 7 comprises a pair of connecting tabs 7a, 7b having different lengths.

A first ("shorter") connecting tab 7a is connected to the first arm 13, while a second ("longer") tab 7b is connected to the second arm 14.

Preferably, the arms 13, 14 are curved, or "L"-shaped to promote the movement of the structure 6. To move the second body 8 depending on the movement of the first body 7, the second body 8 is constrained to shift together with the arms 13, 14 without rotating relative to them.

In particular, the second body 8 pivots at the second end 13b, 14b of one of the arms 13, 14 and is connected to the base 5 by means of a lever 16 pivoting at the base 5.

In a first embodiment, the lever 16 comprises a first end portion 16a hinged to the first end 13a, 14a of one of the arms 13, 14, and a second end portion 16b hinged to the second body 8.

In the embodiment illustrated, the first end portion 16a of the lever 16 is hinged to the first arm 13, at an intermediate portion of the latter. In this way, during rotation of the arm 13, 14 to which it is connected, the second body 8 is subject to the same rotation, passing from the distanced position to the close position.

Advantageously, in this way the rigid connection is obtained in a simple way by forming a rigid triangle whose three sides are formed by the first arm 13, the lever 16 and the second body 8.

The second body 8 could also be made in one piece with the arm to which it is rigidly connected.

The movement means 18 comprise an actuator 12 directly associated with one of the two arms 13, 14 so as to drive its rotation.

The actuator 12 comprises an electric motor or a hydraulic (or pneumatic) cylinder which drives the rotation of the arm to which it is connected.

In the embodiment illustrated, the actuator 12 is connected to the first arm 13.

Preferably, the device comprises a control part 17 associated with the actuator for activating it when the wheel 4 has been positioned.

In the embodiment illustrated, the control part 17 is formed by a pedal 17a associated with the base 5 and positioned close to the surface "A" supporting the machine to facilitate action by the operator. Advantageously, the presence of a pedal 17a allows the operator to keep his hands free for handling the wheel 4.

Preferably, the pedal 17a is positioned at a control unit for the machine 100, so as to facilitate operator operations by keeping all of the control units together.

It should be noticed that the lifting and lowering movements may be performed in alternative ways to that described so far.

The most generic features remaining unchanged, the embodiments described may have alternative kinematic mechanisms or actuators (without departing from the scope of this invention) allowing the same first and second configurations to be obtained.

In a first alternative embodiment (not illustrated), the second body pivots at the first body so that it rotates in such a way that it is coplanar with it.

In other words, the hinge axis between the first body and the second body has an orientation which is substantially at a right angle to both (and parallel with the axis of rotation "B" of the wheel-holder unit 102).

In that embodiment, the two bodies are positioned parallel in all configurations.

In the first configuration the first and second bodies are substantially superposed, while in the positioning configuration they are substantially aligned.

In other words, the second body, to pass from the distanced position to the close position (and vice versa) performs a rotation through approximately 180° in a rotation plane which is substantially parallel with the sustaining surface for the wheel. Said movement (from the distanced position to the close position) may be performed manually by the operator or by means of a suitable actuator associated with the lifting actuator or independent of it.

In a second alternative embodiment (not illustrated), the first and second configurations are substantially the same as those just described, but the movement from the distanced position to the close position (and vice versa) is obtained with sliding of the second body relative to the first body.

In other words, in that embodiment the first and second bodies are slidably connected.

In a third alternative embodiment (not illustrated), the structure comprises a single body or plate designed to perform both the lifting movement and the movement towards the axis of rotation "B" of the wheel-holder unit 102.

In that embodiment, the movement means perform the lifting of the body or plate from the lowered position to the raised positions.

The body can also rotate about a pin associated with the movement means, for rotating from the distanced position to the close position, in a plane substantially parallel with the sustaining surface "C" (that is to say, about an axis parallel with the axis of rotation "B" of the wheel-holder unit 102).

Said rotation is performed manually by the operator once the body or plate is in the raised position.

Alternatively, the movement means comprise a guide (preferably substantially helicoidal) designed to rotate the body or plate during its lifting (or lowering.

In a fourth alternative embodiment (not illustrated), the structure is "L"-shaped and can rotate about a hinge axis transversal (preferably at a right angle) to the axis of rotation "B" of the tabletop 102a.

In that embodiment, the structure therefore comprises two portions which are transversal to each other and rigidly connected.

A first portion abuts to the ground and is distanced from the axis of rotation "B" of the wheel-holder unit 102a when the structure is in the first configuration.

A second portion is alongside the wheel-holder unit 102 and substantially parallel with the surface "A" supporting the machine 100 when the structure is in the second configuration.

Consequently, in that embodiment the structure performs a rotation through approximately 90° to pass from one configuration to the other.

This invention also relates to a method for lifting the wheel 4 for loading it on the tyre changer machine 100, preferably using the lifting device 1 according to this invention.

The method comprises a step of loading the wheel 4 on the sustaining surface "C" formed by the structure 6, by rolling the wheel 4 about its own central axis which is parallel with the ground.

The structure 6 is then moved from the lowered position, in which the sustaining surface "C" is close to and substantially parallel with the surface "A" supporting the tyre changer machine 100, to the raised position, so as to lift the wheel 4.

Then, or preferably simultaneously with that, the structure 6 is at least partly moved towards the axis of rotation "B" of the wheel-holder unit 102 in such a way that it forms a positioning surface "E" for the wheel 4 positioned close to the wheel-holder unit 102.

Said approach step is performed by means of a rotation of the at least one part of the structure 6 about an axis perpendicular to the axis of rotation "B" of the wheel-holder unit 102. Advantageously, this allows the operator to shift the wheel 4 from the sustaining surface "C" to the positioning surface "E", keeping the central axis "D" of the wheel 4 horizontal, and then to shift the wheel 4 from the positioning surface "E" to the wheel-holder unit 102 of the machine 100, on which the wheel 4 is positioned with its central axis "D" substantially vertical, by tipping the wheel through approximately 90 degrees.

It should be noticed that, during the step of moving the structure 6 the sustaining surface "C" is kept away from the tyre changer machine 100.

In other words, the sustaining surface "C" is always distal from the machine, in a non-interference condition.

Moreover, as already indicated in the description of the machine and the device, said sustaining surface "C" is kept parallel with the surface "A" supporting the machine 100.

Operations for unloading the wheel from the tyre changer machine 100 are carried out by simply performing the sequence of operations described above in reverse.

The invention fulfils the preset aims and brings important advantages.

Indeed, the presence of the structure able to move towards/away from the wheel-holder unit of the machine allows the wheel to be brought very close to the tabletop before positioning and simultaneously reduces the dimensions in the home configuration.

Moreover, the use of two bodies able to move relative to each other by means of a kinematic mechanism allows the use of a single actuator to perform both movements, significantly simplifying the construction and reducing the dimensions.

The presence of the positioning surface positioned below the wheel-holder unit allows the frame to be kept in the positioning configuration during tyre mounting/demounting operations, saving significant amounts of time during wheel or tyre unloading after the operation.

## Claims

1. A tyre changer machine (100) comprising a frame (101) which can be rested on a supporting surface (A), a wheel-holder unit (102) able to rotate about its own axis of rotation (B) perpendicular to the supporting surface (A) and designed to support a rim (3) of a wheel (4), to allow demounting or mounting a respective tyre (2) from or on the rim (3), and a lifting device (1) comprising:
- a structure (6) forming a sustaining surface (C) which is level for allowing the wheel (4) to be rested and rolled on the sustaining surface (C), the structure (6) being able to move between a lowered position, in which the sustaining surface (C) is drawn near the surface (A) supporting the tyre changer machine (100) for, allowing the wheel (4) to be loaded on the sustaining surface (C) with the wheel axis of rotation parallel with the supporting surface (A), and a raised position;
- movement means (18) connected to the structure (6) for moving it between the lowered position and the raised position along a predetermined trajectory, in such a way that the structure (6) is kept at a distance from the wheel-holder unit (102) without surrounding it and the sustaining surface (C) is kept substantially parallel with the surface (A) supporting the machine (100),
the movement means (18) of the lifting device (1) are designed in such a way as to further shift at least one portion (6a) of the structure (6) towards the axis of rotation (B) of the wheel-holder unit (102), **characterised in that** the movement means (18) are configured for positioning said at least one portion (6a) of the structure (6), when the structure (6) is in the raised position, in a predetermined position close to one upper end of the wheel-holder unit (102) and positioned aside with respect to said wheel-holder unit (102), for defining a positioning surface (E) located in the predetermined position, in such a way as to allow a user to tip the wheel (4) from said predetermined position to a coupling position for coupling the wheel (4) with the wheel-holder unit (102) in which the wheel (4) has its axis aligned with the axis of rotation (B) of the wheel-holder unit (102).

2. The machine according to claim 1, wherein the portion (6a) of the structure (6) can move between a non-interference position relative to the machine frame (101), and a position close to the wheel-holder unit (102), in which it forms a positioning surface (E) located in the predetermined position, at a side of the wheel-holder unit (102), the movement means being designed to move the structure (6), in such a way that the structure (6) does not intersect the axis of rotation (B) of the wheel-holder unit (102).

3. The machine according to claim 2, wherein the structure (6) can be shifted between a contracted configuration, in which it occupies a minimum area parallel with the supporting surface (A), and an extended configuration, in which it occupies a maximum area parallel with the supporting surface (A); the movement means (18) being designed to position the structure (6) in the contracted configuration when it is in the lowered position, and to position the structure (6) in the extended configuration when it is in the raised position, in such a way that it projects towards the axis of rotation (B) of the wheel-holder unit (102), defining a wheel (4) rolling path (P) towards the predetermined position.

4. The machine according to claim 3, wherein the movement means (18) are designed in such a way that, when the structure (6) is in the extended configuration, the sustaining surface (C) and the positioning surface (E) are side by side and at least partly adjacent, defining the rolling path (P).

5. The machine according to any of the foregoing claims, wherein the movement means (18) are designed in such a way that, when the structure (6) is in the raised position, said at least one portion (6a) of the structure (6) is positioned at a height which is lower than the upper end of the wheel-holder unit (102).

6. The machine according to any of the foregoing claims, wherein the movement means (18) are designed in such a way that said at least one portion (6a) of the structure (6), when it is in the predetermined position, is positioned at a predetermined distance from the axis of rotation (B) of the wheel-holder unit (102) which is approximately equal to a radius (R) of the wheel (4) to be positioned on the wheel-holder unit (102).

7. The machine according to any of the foregoing claims, wherein the structure (6) of the lifting device (1) comprises a first body (7) forming the sustaining surface (C), and a second body (8) connected to the first body (7) for shifting with it between the lowered position and the raised position and forming said at least one portion (6a), the second body (8) being able to move relative to the first body (7) along a further trajectory.

8. The machine according to claim 7, wherein the second body (8) is rotatably associated with the first body (7) for rotating relative to it along said further trajectory.

9. The machine according to claim 8, wherein the movement means (18) are designed to position the second body (8) perpendicular to the first body (7), when the structure (6) is in the lowered position, and in a position substantially aligned with the first body (7), when the structure (6) is in the raised position.

10. The machine according to any of the claims from 7 to 9, wherein the movement means (18) of the lifting device (1) comprise a kinematic mechanism (11) connected to the first body (7) and to the second body (8) and designed in such a way that a shifting of the structure (6) along the predetermined trajectory corresponds to a further shifting of the second body (8) along said further trajectory.

11. The machine according to any of the claims from 7 to 10, wherein the movement means (18) of the lifting device (1) comprise a kinematic mechanism (11) with a four-bar linkage (15) connected to the structure (6) for moving it between the raised position and the lowered position, in such a way that the sustaining surface (C) remains parallel with the supporting surface (A) during movement of the structure (6), wherein the four-bar linkage (15) comprises a first arm (13) and a second arm (14), each comprising a first end (13a, 14a) hinged in a base (5) of the lifting device (1), and a second end (13b, 14b) hinged in the first body (7), and wherein the second body (8) is constrained to shift together with the arms (13, 14) without rotating relative to them.

12. The machine according to claim 11, wherein the second body (8) is hinged in the second end (13b, 14b) of one of the arms (13, 14) and is connected to the base (5) of the lifting device (1) by means of a lever (16) hinged in the base (5) or in one of the arms (13, 14).

13. A method for lifting a wheel (4) for loading it on a tyre changer machine (100) comprising a wheel-holder unit (102) able to rotate about its own axis of rotation (B) and designed to support a rim (3) of the wheel (4), to allow demounting or mounting a respective tyre (2) from or on the respective rim (3),
the method comprises the following steps:
- loading the wheel (4) on a sustaining surface (C) formed by a structure (6), by rolling the wheel (4) about its own central axis (D) which is parallel with a surface (A) supporting the machine;
- moving the structure (6) from a lowered position, in which the sustaining surface (C) is close to and substantially parallel with the surface (A) supporting the machine (100), to a raised position, for lifting the wheel (4) along a predetermined trajectory;
- simultaneously with or after said movement, moving at least one portion (6a) of the structure (6) towards the axis of rotation (B) of the wheel-holder unit (102), **characterised in that** the moving is done in such a way that said at least one portion (6a) of the structure (6), in the raised position, is located in a predetermined position close to one upper end of the wheel-holder unit (102) and the structure (6) is positioned aside with respect to said wheel-holder unit (102), in such a way that said portion (6a) of the structure (6) defines a positioning surface (E) located in the predetermined position, thus allowing an operator to tip the wheel (4) from the predetermined position on the portion (6a) to a coupling position for coupling the wheel to the wheel-holder unit (102) in which the wheel (4) has its axis aligned with the axis of rotation (B) of the wheel-holder unit (102).

14. The lifting method according to claim 13, wherein during the structure (6) movement step and the approach step, the sustaining surface (C) is kept away from the tyre changer machine (100) without intersecting the axis of rotation (B) of the wheel-holder unit (102).

15. The method according to claim 13 or 14, wherein during the movement step and the approach step the sustaining surface (C) is kept parallel with the surface (A) supporting the machine (100).

16. The method according to any of the claims from 13 to 15, wherein the approach step is carried out by means of a rotation of the at least one portion (6a) of the structure (6) from a minimum dimensions position relative to the machine frame, in which it is positioned when the structure (6) is in the lowered position, to a position projecting towards the axis of rotation (B) of the wheel-holder unit (102), in which it is positioned when the structure (6) is in the raised position.

## Patentansprüche

1. Reifenwechselmaschine (100), umfassend einen Rahmen (101), der auf eine Auflageoberfläche (A) aufgelegt werden kann, eine Radhaltereinheit (102), die in der Lage ist, sich um ihre eigene Rotationsachse (B) lotrecht zur Auflagefläche (A) zu drehen, und ausgelegt, um eine Felge (3) eines Rads (4) zu tragen, um das Abmontieren oder Montieren eines jeweiligen Reifens (2) von der oder auf die Felge (3) zu erlauben, und eine Hebevorrichtung (1), umfassend:
- eine Konstruktion (6), bildend eine Halteoberfläche (C), die nivelliert ist, damit das Rad (4) auf die Halteoberfläche (C) aufgelegt und gerollt werden kann, wobei die Konstruktion (6) in der Lage ist, sich zwischen einer abgesenkten Stellung, in der die Halteoberfläche (C) in die Nähe der Oberfläche (A) gezogen wird, auf der die Reifenwechselmaschine (100) aufliegt, damit das Rad (4) mit der Radrotationsachse parallel zur Auflageoberfläche (A) auf die Halteoberfläche (C) geladen werden kann, und einer angehobenen Stellung bewegt zu werden;
- Bewegungsmittel (18), verbunden mit der Konstruktion (6), um diese zwischen der abgesenkten Stellung und der angehobenen Stellung entlang einer vorgegebenen Bahn zu bewegen, sodass die Konstruktion (6) auf einem Abstand zur Radhaltereinheit (102) beibehalten wird, ohne diese zu umgeben, und die Halteoberfläche (C) im Wesentlichen parallel zur Auflageoberfläche (A) der Maschine (100) beibehalten wird, wobei die Bewegungsmittel (18) der Hebevorrichtung (1) so ausgelegt sind, dass mindestens ein Abschnitt (6a) der Konstruktion (6) weiter zur Rotationsachse (B) der Radhaltereinheit (102) verschoben wird, **dadurch gekennzeichnet, dass** die Bewegungsmittel (18) ausgebildet sind, um diesen mindestens einen Abschnitt (6a) der Konstruktion (6), wenn sich die Konstruktion (6) in der angehobenen Stellung befindet, auf einer vorgegebenen Position in der Nähe eines oberen Endes der Radhaltereinheit (102) und seitlich der Radhaltereinheit (102) zu positionieren, um eine Positionierungsoberfläche (E) an der vorgegebenen Position zu definieren, sodass einem Nutzer ermöglicht wird, das Rad (4) von der vorgegebenen Position zu einer Kupplungsposition zu neigen, um das Rad (4) mit der Radhaltereinheit (102) zu kuppeln, in der die Achse des Rads (4) zur Rotationsachse (B) der Radhaltereinheit (102) ausgerichtet ist.

2. Maschine nach Anspruch 1, wobei sich der Abschnitt (6a) der Konstruktion (6) zwischen einer nicht interferierenden Position zum Maschinenrahmen (101) und einer Position in der Nähe der Radhaltereinheit (102) bewegen kann, in der er eine Positionierungsoberfläche (E) an der vorgegebenen Position an einer Seite der Radhaltereinheit (102) bildet, wobei die Bewegungsmittel ausgelegt sind, um die Konstruktion (6) so zu bewegen, dass die Konstruktion (6) die Rotationsachse (B) der Radhaltereinheit (102) nicht schneidet.

3. Maschine nach Anspruch 2, wobei die Konstruktion (6) zwischen einer zurückgezogenen Konfiguration, in der sie einen minimalen Bereich einnimmt, der parallel zur Auflageoberfläche (A) angeordnet ist, und einer ausgezogenen Konfiguration, in der sie einen maximalen Bereich einnimmt, der parallel zur Auflageoberfläche (A) angeordnet ist, verschoben werden kann; wobei die Bewegungsmittel (18) ausgelegt sind, um die Konstruktion (6) in der zurückgezogenen Konfiguration zu positionieren, wenn sie sich in der abgesenkten Stellung befindet, und um die Konstruktion (6) in der ausgezogenen Konfiguration zu positionieren, wenn sie sich in der angehobenen Stellung befindet, sodass sie zur Rotationsachse (B) der Radhaltereinheit (102) ragt und eine Rollbahn (P) des Rads (4) zur vorgegebenen Position definiert.

4. Maschine nach Anspruch 3, wobei die Bewegungsmittel (18) so ausgelegt sind, dass die Halteoberfläche (C) und die Positionierungsoberfläche (E) Seite an Seite und zumindest teilweise angrenzend angeordnet sind und die Rollbahn (P) definieren, wenn sich die Konstruktion (6) in der ausgezogenen Konfiguration befindet.

5. Maschine nach einem der vorhergehenden Ansprüche, wobei die Bewegungsmittel (18) so ausgelegt sind, dass der mindestens eine Abschnitt (6a) der Konstruktion (6), wenn sich die Konstruktion (6) in der angehobenen Stellung befindet, auf einer Höhe positioniert wird, die niedriger ist als das obere Ende der Radhaltereinheit (102).

6. Maschine nach einem der vorhergehenden Ansprüche, wobei die Bewegungsmittel (18) so ausgelegt sind, dass der mindestens eine Abschnitt (6a) der Konstruktion (6), wenn er sich in der vorgegebenen Position befindet, auf einem vorgegebenen Abstand zur Rotationsachse (B) der Radhaltereinheit (102) positioniert wird, der ungefähr gleich einem Radius (R) des Rads (4), das auf der Radhaltereinheit (102) zu positionieren ist, ist.

7. Maschine nach einem der vorhergehenden Ansprüche, wobei die Konstruktion (6) der Hebevorrichtung (1) einen ersten Körper (7) umfasst, der die Halteoberfläche (C) bildet, und einen zweiten Körper (8), der mit dem ersten Körper (7) verbunden ist, um diesen zwischen der abgesenkten Stellung und der angehobenen Stellung zu verschieben, und bildend den mindestens einen Abschnitt (6a), wobei der zweite Körper (8) in der Lage ist, sich relativ zum ersten Körper (7) entlang einer weiteren Bahn zu bewegen.

8. Maschine nach Anspruch 7, wobei der zweite Körper (8) drehbar mit dem ersten Körper (7) verbunden ist, um sich relativ dazu entlang der weiteren Bahn zu drehen.

9. Maschine nach Anspruch 8, wobei die Bewegungsmittel (18) ausgelegt sind, um den zweiten Körper (8) lotrecht zum ersten Körper (7) zu positionieren, wenn sich die Konstruktion (6) in der abgesenkten Stellung befindet, und in einer Position, die im Wesentlichen zum ersten Körper (7) ausgerichtet ist, wenn sich die Konstruktion (6) in der angehobenen Stellung befindet.

10. Maschine nach einem der Ansprüche 7 bis 9, wobei die Bewegungsmittel (18) der Hebevorrichtung (1) einen kinematischen Mechanismus (11) umfassen, der mit dem ersten Körper (7) und dem zweiten Körper (8) verbunden und so ausgelegt ist, dass eine Verschiebung der Konstruktion (6) entlang der vorgegebenen Bahn einer weiteren Verschiebung des zweiten Körpers (8) entlang der weiteren Bahn entspricht.

11. Maschine nach einem der Ansprüche 7 bis 10, wobei die Bewegungsmittel (18) der Hebevorrichtung (1) einen kinematischen Mechanismus (11) mit einer Vierstangenverbindung (15) umfassen, verbunden mit der Konstruktion (6), um diese in die angehobene Stellung und die abgesenkte Stellung zu bewegen, sodass die Halteoberfläche (C) während der Bewegung der Konstruktion (6) parallel zur Auflageoberfläche (A) angeordnet bleibt, wobei die Vierstangenverbindung (15) einen ersten Arm (13) und einen zweiten Arm (14) umfasst, die je ein erstes Ende (13a, 14a) umfassen, das mittels eines Gelenks mit einer Basis (5) der Hebevorrichtung (1) verbunden ist, und ein zweites Ende (13b, 14b), das mit dem ersten Körper (7) mittels eines Gelenks verbunden ist, und wobei der zweite Körper (8) gezwungen ist, sich mit den Armen (13, 14) zu verschieben, ohne sich relativ zu ihnen zu drehen.

12. Maschine nach Anspruch 11, wobei der zweite Körper (8) mittels eines Gelenks mit dem zweiten Ende (13b, 14b) eines der Arme (13, 14) und mit der Basis (5) der Hebevorrichtung (1) durch einen Hebel (16) verbunden ist, der mit der Basis (5) oder mit einem der Arme (13, 14) mittels eines Gelenks verbunden ist.

13. Verfahren zum Anheben eines Reifens (4) zum Laden des Reifens auf eine Reifenwechselmaschine (100), umfassend eine Radhaltereinheit (102), die in der Lage ist, sich um ihre eigene Rotationsachse (B) zu drehen, und ausgelegt, um eine Felge (3) des Rads (4) zu tragen, um das Abmontieren oder Montieren eines jeweiligen Reifens (2) von der oder auf die jeweilige Felge (3) zu erlauben, wobei das Verfahren folgende Schritte umfasst:
- Laden des Rads (4) auf eine Halteoberfläche (C), gebildet durch eine Konstruktion (6), indem das Rad (4) um seine eigene mittige Achse (D) gerollt wird, die parallel zur Auflagefläche (A) der Maschine angeordnet ist;
- Bewegen der Konstruktion (6) von einer abgesenkten Stellung, in der sich die Halteoberfläche (C) in der Nähe und im Wesentlichen parallel zur Auflageoberfläche (A) der Maschine (100) befindet, in eine angehobene Stellung, um das Rad (4) entlang einer vorgegebenen Bahn anzuheben;
- gleichzeitig mit oder nach der Bewegung, Drehen von mindestens einem Abschnitt (6a) der Konstruktion (6) zur Rotationsachse (B) der Radhaltereinheit (102) **dadurch gekennzeichnet, dass** die Bewegung so erfolgt, dass sich der mindestens eine Abschnitt (6a) der Konstruktion (6) in der angehobenen Stellung an einer vorgegebenen Position befindet, die sich in der Nähe eines oberen Endes der Radhaltereinheit (102) befindet, und die Konstruktion (6) seitlich von der Radhaltereinheit (102) positioniert wird, sodass der Abschnitt (6a) der Konstruktion (6) eine Positionierungsfläche (E) definiert, die sich an der vorgegebenen Position befindet, was einem Bediener erlaubt, das Rad (4) von der vorgegebenen Position am Abschnitt (6a) zu einer Kupplungsposition zu neigen, um das Rad mit der Radhaltereinheit (102) zu kuppeln, wobei die Achse des Rads (4) zur Rotationsachse (B) der Radhaltereinheit (102) ausgerichtet ist.

14. Verfahren zum Anheben nach Anspruch 13, wobei die Halteoberfläche (C) während des Schritts der Bewegung der Konstruktion (6) und des Annäherungsschritts von der Reifenwechselmaschine (100) entfernt gehalten wird, ohne die Rotationsachse (B) der Radhaltereinheit (102) zu schneiden.

15. Verfahren nach Anspruch 13 oder 14, wobei die Halteoberfläche (C) während des Bewegungsschritts und des Annäherungsschritts parallel zur Auflageoberfläche (A) der Maschine (100) beibehalten wird.

16. Verfahren nach einem der Ansprüche 13 bis 15, wobei der Annährungsschritt mittels einer Drehung des mindestens einen Abschnitts (6a) der Konstruktion (6) von einer Mindestdimensionsposition relativ zum Maschinenrahmen, in der dieser positioniert ist, wenn sich die Konstruktion (6) in der abgesenkten Stellung befindet, in eine zur Rotationsachse (B) der Radhaltereinheit (102) ragende Position, in der er positioniert ist, wenn sich die Konstruktion (6) in der angehobenen Stellung befindet, ausgeführt wird.

## Revendications

1. Machine de changement de pneu (100) comprenant un châssis (101) qui peut reposer sur une surface d'appui (A), une unité de support de roue (102) pouvant pivoter autour de son propre axe de rotation (B) perpendiculaire à la surface d'appui (A) et conçue pour soutenir une jante (3) d'une roue (4), pour permettre le démontage ou le montage d'un pneu respectif (2) de ou sur la jante (3), et un dispositif de levage (1) comprenant :
- une structure (6) formant une structure de soutien (C) qui est uniforme pour pouvoir placer et faire rouler la roue (4) sur la surface de soutien (C), la structure (6) pouvant se déplacer entre une position basse, dans laquelle la surface de soutien (C) se rapproche de la surface (A) supportant la machine de changement de pneu (100) pour pouvoir charger la roue (4) sur la surface de soutien (C) avec l'axe de rotation de la roue parallèle à la surface d'appui (A), et une position haute ;
- des moyens de manutention (18) connectés à la structure (6) pour la déplacer entre la position basse et la position haute le long d'une trajectoire prédéterminée, de sorte que la structure (6) est gardée à une distance de l'unité de support de roue (102) sans l'entourer, et la surface de soutien (C) est gardée essentiellement parallèle à la surface (A) supportant la machine (100), les moyens de manutention (18) du dispositif de levage (1) sont conçus de sorte à pousser davantage au moins une partie (6a) de la structure (6) vers l'axe de rotation (B) de l'unité de support de roue (102), **caractérisée en ce que** les moyens de manutention (18) sont configurés pour positionner ladite au moins une partie (6a) de la structure (6), quand la structure (6) se trouve dans la position haute, dans une position prédéterminée à proximité d'une extrémité supérieure de l'unité de support de roue (102) et à côté de ladite unité de support de roue (102), pour former une surface de positionnement (E) située dans la position prédéterminée, de sorte à permettre à un utilisateur de faire basculer la roue (4) de ladite position prédéterminée à une position de couplage pour coupler la roue (4) à l'unité de support de roue (102) dans laquelle la roue (4) a son axe aligné sur l'axe de rotation (B) de l'unité de support de roue (102).

2. Machine selon la revendication 1, dans laquelle la partie (6a) de la structure (6) peut se déplacer entre une position de non interférence par rapport au châssis de la machine (101), et une position à proximité de l'unité de support de roue (102), dans laquelle elle forme une surface de positionnement (E) située dans la position prédéterminée, à côté de l'unité de support de roue (102), les moyens de manutention étant conçus pour déplacer la structure (6), de sorte que la structure (6) ne coupe pas l'axe de rotation (B) de l'unité de support de roue (102).

3. Machine selon la revendication 2, dans laquelle la structure (6) peut passer d'une configuration repliée dans laquelle elle occupe une surface minimale parallèle à la surface d'appui (A), à une configuration déployée dans laquelle elle occupe une surface maximale parallèle à la surface d'appui (A) ; les moyens de manutention (18) étant conçus pour positionner la structure (6) dans la configuration repliée lorsqu'elle se trouve dans la position basse, et pour positionner la structure (6) dans la configuration déployée lorsqu'elle se trouve dans la position haute, de sorte qu'elle se dirige vers l'axe de rotation (B) de l'unité de support de roue (102), formant un parcours de roulement (P) de la roue (4) vers la position prédéterminée.

4. Machine selon la revendication 3, dans laquelle les moyens de manutention (18) sont conçus de sorte que, lorsque la structure (6) est dans la configuration déployée, la surface de soutien (C) et la surface de positionnement (E) se retrouvent côte à côte et au moins partiellement adjacentes, formant le parcours de roulement (P).

5. Machine selon l'une quelconque des revendications précédentes, dans laquelle les moyens de manutention (18) sont conçus de sorte que, lorsque la structure (6) est dans la position haute, ladite au moins une partie (6a) de la structure (6) est positionnée à une hauteur qui est inférieure à l'extrémité supérieure de l'unité de support de roue (102).

6. Machine selon l'une quelconque des revendications précédentes, dans laquelle les moyens de manutention (18) sont conçus de sorte que ladite au moins une partie (6a) de la structure (6), lorsqu'elle est dans la position prédéterminée, est positionnée à une distance prédéterminée de l'axe de rotation (B) de l'unité de support de roue (102) qui est approximativement égale à un rayon (R) de la roue (4) qui doit être positionnée sur l'unité de support de roue (102).

7. Machine selon l'une quelconque des revendications précédentes, dans laquelle la structure (6) du dispositif de levage (1) comprend un premier organe (7) formant la surface de soutien (C), et un second organe (8) connecté au premier organe (7) pour se déplacer avec lui entre la position basse et la position haute et formant ladite au moine une partie (6a), le second organe (8) pouvant se déplacer par rapport au premier organe (7) le long d'une trajectoire supplémentaire.

8. Machine selon la revendication 7, dans laquelle le second organe (8) est associé de façon rotative au premier organe (7) pour pivoter par rapport à lui le long de ladite trajectoire supplémentaire.

9. Machine selon la revendication 8, dans laquelle les moyens de manutention (18) sont conçus pour positionner le second organe (8) perpendiculaire au premier organe (7), lorsque la structure (6) est dans la position basse, et dans une position essentiellement alignée sur le premier organe (7), quand la structure (6) est dans la position haute.

10. Machine selon l'une quelconque des revendications de 7 à 9, dans laquelle les moyens de manutention (18) du dispositif de levage (1) comprennent un mécanisme cinématique (11) connecté au premier organe (7) et au second organe (8) et conçu de sorte qu'un déplacement de la structure (6) le long de la trajectoire prédéterminée correspond à un déplacement supplémentaire du second organe (8) le long de ladite trajectoire.

11. Machine selon l'une quelconque des revendications de 7 à 10, dans laquelle les moyens de manutention (18) du dispositif de levage (1) comprennent un mécanisme cinématique (11) avec un quadrilatère articulé (15) connecté à la structure (6) pour la déplacer entre la position haute et la position basse, de sorte que la surface de soutien (C) reste parallèle à la surface d'appui (A) pendant le mouvement de la structure (6), dans laquelle le quadrilatère articulé (15) comprend un premier bras (13) et un second bras (14), présentant chacun une première extrémité (13a, 14a) montée pivotante sur une base (5) du dispositif de levage (1), et une seconde extrémité (13b, 14b) montée pivotante sur le premier organe (7), et dans laquelle le second organe (8) est obligé de se déplacer avec les bras (13, 14) sans pivoter par rapport à eux.

12. Machine selon la revendication 11, dans laquelle le second organe (8) est monté pivotant sur la seconde extrémité (13b, 14b) de l'un des bras (13, 14) et est connecté à la base (5) du dispositif de levage (1) par le biais d'un levier (16) monté pivotant sur la base (5) ou sur l'un des bras (13, 14).

13. Procédé de levage d'une roue (4) pour son chargement sur une machine de changement de pneu (100) comprenant une unité de support de roue (102) pouvant pivoter autour de son propre axe de rotation (B) et conçue pour soutenir une jante (3) de la roue (4), pour permettre le démontage ou le montage d'un pneu respectif (2) de ou sur la jante respective (3), le procédé comprend les étapes suivantes :
- charger la roue (4) sur une surface de soutien (C) formée par une structure (6), en faisant rouler la roue (4) autour de son propre axe central (D) qui est parallèle à une surface (A) supportant la machine ;
- déplacer la structure (6) d'une position basse dans laquelle la surface de soutien (C) est à proximité et essentiellement parallèle à la surface (A) supportant la machine (100), à une position haute, pour lever la roue (4) le long d'une trajectoire prédéterminée ;
- simultanément à ou après ledit mouvement, déplacer au moins une partie (6a) de la structure (6) vers l'axe de rotation (B) de l'unité de support de roue (102), **caractérisé en ce que** le mouvement se fait de sorte que ladite au moins une partie (6a) de la structure (6), dans la position haute, se trouve dans une position prédéterminée près d'une extrémité supérieure de l'unité de support de roue (102), et la structure (6) est positionnée à côté de ladite unité de support de roue (102), de sorte que ladite partie (6a) de la structure (6) forme une surface de positionnement (E) située dans la position prédéterminée, permettant ainsi à un opérateur de faire basculer la roue (4) de la position prédéterminée sur la partie (6a) à une position de couplage pour coupler la roue à l'unité de support de roue (102) dans laquelle la roue (4) a son axe aligné sur l'axe de rotation (B) de l'unité de support de roue (102).

14. Procédé de levage selon la revendication 13, dans lequel pendant l'étape de déplacement et l'étape d'approche de la structure (6), la surface de soutien (C) s'éloigne de la machine de changement de pneu (100) sans couper l'axe de rotation (B) de l'unité de support de roue (102).

15. Procédé selon les revendications 13 ou 14, dans lequel pendant l'étape de déplacement et l'étape d'approche, la surface de soutien (C) est gardée parallèle à la surface (A) supportant la machine (100).

16. Procédé selon l'une quelconque des revendications de 13 à 15, dans lequel l'étape d'approche se fait par une rotation de ladite au moins une partie (6a) de la structure (6) d'une position de taille minimale par rapport au châssis de la machine, dans laquelle elle se trouve lorsque la structure (6) est dans la position basse, à une position se dirigeant vers l'axe de rotation (B) de l'unité de support de roue (102), dans laquelle elle se trouve lorsque la structure (6) est dans la position haute.
